# EUROPEAN PATENT APPLICATION

(11) **EP 4 718 029 A1**
(43) Date of publication of application: **01.04.2026**
(21) Application number: 24203629.1
(22) Date of filing: 30.09.2024
(51) Int. Cl.: G01C 21/16

(54) **COMPUTER IMPLEMENTED METHOD FOR CONTINUOUS POSITION ESTIMATION OF A MOVING BODY**

(71) Applicant: Siemens Industry Software NV, 3001 Leuven (BE)
(72) Inventor: De Gregoriis, Daniel, 3020 Winksele (BE)
(74) Representative: Siemens Patent Attorneys

(57) **Abstract**

The invention relates to a computer implemented method for continuous position estimation of a moving body (BDY), comprising:
(a) Providing an initial (INT) position (POS) and initial (INT) orientation (ORN) of at least one motion sensor (SNR) attached to said body (BDY);
(b) Measuring motion parameters (PRM) comprising at least one acceleration (ACC) in at least one spatial direction (DRT), using said at least one motion sensor (SNR);
(c) Providing a motion-model (MMD) for predicting the motion of the body (BDY), wherein the motion-model (MMD) is designed to time-stepwise determine an estimate (EST) of the translation and orientation (ORN) of the body (BDY);
(d) Providing a Kalman filter (KMF) comprising a prediction module (PDM) and a correction module (CRM) both working in a repetitive loop,
wherein said motion-model (MMD) is used as the prediction module (PDM) for estimating (EST) the motion of the body (BDY).
It is proposed, that said model proceeding in the following steps when predicting the motion of the body (BDY):
- assuming a center of gravity (COG) of the body (BDY),
- estimating (EST) the physical forces (PFC) and torques that are acting on the assumed center of gravity (COG) of the body (BDY) to achieve the measured motions,
- determining a prediction of the body (BDY) position from the estimated (EST) physical forces (PFC) and torques.

## Description

The present invention relates to a computer implemented method for continuous position estimation of a moving body, comprising:
(a) Providing an initial position and initial orientation of at least one motion sensor attached to said body;
(b) Measuring motion parameters comprising at least one acceleration in at least one spatial direction, using said at least one motion sensor;
(c) Providing a motion-model for predicting the motion of the body,
   wherein the motion-model is designed to time-stepwise determine an estimate of the position and orientation of the body;
(d) Providing a Kalman filter comprising a prediction module and a correction module both working in a repetitive loop,
   wherein said motion-model is used as the prediction module for estimating the motion of the body.

Furthermore, the invention relates to a system being designed and prepared to carry out said method according to the invention, in particular a positioning system, for example for displaying a vehicle position on a navigation system display.

Most preferably the invention provides a computer implemented method for continuous position and orientation estimation of a moving body.

Engineers are regularly faced with the challenge to 'measure the unmeasurable'. In many situations a measurement is required for which no sensor of right size and/or right property is available or can be mounted on a meaningful location on the body of interest. This limits or prohibits the direct measurements. Position-level measurements (encoders, camera-based systems, others) are often too intrusive and a position and orientation estimation method that does not rely on these types of measurements is therefore desired. This invention proposes a solution to estimate the position and orientation of a body in space as a function of time, using only accelerometer and optionally gyroscope measurements, mitigating therefore the need for the position-level measurements.

The problem of position and/or orientation estimation (sometimes referred to as altitude and attitude estimation or pose estimation) arises across a multitude of different technical fields and disciplines, such as e.g. land vehicle navigation, naval applications, aviation, robotics, human motion tracking (e.g., medical applications) as well as mobile/wearable electronic devices such as e.g. smartphones and smart watches. Depending on the specific field, different levels of accuracy are required and obtained by the proposed approaches in literature.

The invention is based on the problem of improving the known Computer implemented method for continuous position estimation.

### Background of the invention

For better readability herein references to a publication X are made in the style of `[X]', wherein further below the full citation is provided separately.

Known technical analysis or solutions include the following approaches:
- Focus on pure orientation estimation, not tackling position estimation [1, 2, 3];
- Using in general quaternions rather than sequential angles (such as e.g., Euler or Bryant angles) to prevent singular orientation descriptions;
- Accelerometer and gyroscope measurements in combination with magnetometer measurements; these approaches require an additional type of sensor next to accelerometer and/or gyroscope measurements [3];
- Some approaches require the use of GPS systems, and the respective proposals are designed to bridge periods when GPS signals are not available;
- Some approaches provide a predictor-corrector approach; in these cases, the use of a kinematic model within a filter is proposed. The filters are of various kinds, ranging from complementary filters to various variants of the Kalman filter, wherein the sensor measurements are considered inputs to the system [1, 3].

In these approaches several assumptions are made regarding the time discretization of the system states and the specific kinematic relationships. The approaches then often require a secondary filter, or something equivalent, to provide reference measurements or predictions to be used in the corrector-step of the primary filter.

Predictor-corrector approaches using a Kalman filter have also been proposed in the context of virtual sensing. Here, the focus lies on structural applications and is often on unknown load estimation for deforming not moving components, i.e. deforming bodies that do not undergo translation and/or rotation. [4].

Some approaches have been proposed for applications where bodies can undergo translation and/or rotation, but these approaches explicitly require position-level measurements [6] with an explicit focus on load estimation rather than position and orientation estimation. Similar virtual sensing approaches have been proposed that however explicitly filter out rigid body translation and/or rotation, therefore not targeting nor allowing position and orientation estimation [5].

A double-integration approach is disclosed in [2]. This disclosure assumes small acceleration or minimal sensor-related perturbances and the accelerometer and/or gyroscope measurements are integrated to yield position and orientation (i.e. angle) estimations directly.

These approaches are highly sensitive to drift that inherently arises when using physical sensors, which is then typically mitigated using the predictor-corrector approaches described above to varying degrees of success.

Some approaches rely on the use of the earth's gravitational field as a reference, combined with the earth's magnetic field [1]. This leads to observability problems as the angle around the gravitational direction cannot be determined when using just the accelerometer measurements. Using magnetometer measurements to mitigate the observability problem is often not feasible, as magnetometers are very sensitive (referred to as "jitter") to (electro-)magnetic disturbances arising from the system that is being instrumented itself and/or external sources.

In conclusion, existing methods in prior art fail to address the challenge to estimate the position and orientation of a body in space using only accelerometer and optionally gyroscope measurements. Position-level measurements (encoders, camera-based systems, others) are often too intrusive and a position and orientation estimation method that does not rely on these types of measurements is therefore desired and would allow to solve the problem of body position and orientation estimation across a multitude of different fields and disciplines.

The publications referred to above are:
[1] A. Kim, M.F. Golnaraghi, A quaternion-based orientation estimation algorithm using an inertial measurement unit, in: PLANS 2004. Position Location and Navigation Symposium (IEEE Cat. No.04CH37556), 2004: pp. 268-272. https://doi.org/10.1109/PLANS.2004.1309003.
[2] S. Stančin, S. Tomažič, Angle Estimation of Simultaneous Orthogonal Rotations from 3D Gyroscope Measurements, Sensors 11 (2011) 8536-8549. https://doi.org/10.3390/s110908536.
[3] R. Kannan, Orientation Estimation Based on LKF Using Differential State Equation, IEEE Sensors Journal 15 (2015) 6156-6163. https://doi.org/10.1109/JSEN .2015.2455496.
[4] F. Naets, J. Croes, W. Desmet, An online coupled state/input/parameter estimation approach for structural dynamics, Computer Methods in Applied Mechanics and Engineering 283 (2015) 1167-1188.
[5] J. Anthonis, S. Gillijns, Identifying Forces in a Interface Between a Body and a Suspension of a Vehicle, US20160129915A1, 2016. https://patents.google.com/patent/US20160129915A1/en?q=(steven+gillijns)&inventor= jan+anthonis&oq=steven+gillijns+jan+anthonis (accessed February 15, 2024).
[6] E. Risaliti, T. Tamarozzi, M. Vermaut, B. Cornelis, W. Desmet, Multibody model based estimation of multiple loads and strain field on a vehicle suspension system, Mechanical Systems and Signal Processing 123 (2019) 1-25.

### Summary of the invention

In the context of the invention, a Kalman filter is a method to estimate the true value of a physical parameter by combining measurements with predictions. Herein, these parameters are geometrical information about the position and orientation of a body. Herein, a pose can be used to describe the position and orientation of any object in a 3D space. A position may be defined by three coordinates (x,y,z), representing a position in 3D space. An orientation may be specified as Euler angles, a quaternion, or a rotation matrix. The position or a pose can be absolute (i.e. relative to the world frame), or relative to a specific frame.

In the context of the invention, a rigid single-body plant model refers to a representation of a physical object or system as a single solid body that does not deform or change shape. In this model, the object is assumed to be rigid, meaning its relative positions of different parts remain constant, and it does not experience any internal deformation or flexibility. The rigid single-body plant model simplifies the system by disregarding factors such as elasticity, deformation, or complex internal dynamics that may be present in more realistic models. Such modelling may be used in applications where the object or system being modeled can be considered as a single solid entity, such as a robot arm, a vehicle, or a spacecraft. The modelling is done numerically using a mathematical description of the position or pose. The numerical description serves the technical purpose to predict the position or pose (orientation and position) of the body in space which enables practical applications as explained above, like navigation or collision avoidance more efficiently. The invention deals with this kind of bodies or objects assuming that the object's behavior can be described by its overall motion, i.e. position and orientation, without considering the internal dynamics or deformations of individual components.

The use of the term "plant" for the system being modeled or controlled in the context of control systems and Kalman filters is a convention that has been established in the field of control theory and is widely accepted. It helps to differentiate the system being modeled or controlled from the algorithms, techniques, or devices used to analyze or manipulate that system.

The invention solves the problem of position and orientation estimation by a method of the incipiently type wherein said model proceeding in the following steps when predicting the motion of the body:
- assuming a center of gravity of the body,
- estimating the physical forces and torques that are acting on the assumed center of gravity of the body to achieve the measured motions,
- determining a prediction of the body motion from the estimated physical forces and torques.

Furthermore, the invention solves this problem by a system carrying out the method according to the method as claimed or any of its preferred embodiments as explained herein.

The step of assuming the center of gravity refers to the position of the center of gravity. Herein a reasonable assumption is that the body's mass is concentrated at a single point understood as the center of gravity. In this assumption the center of gravity represents the average position of all the body's mass. Herein, it is reasonable to assume that the center of gravity remains fixed relative to the body as it moves. The invention basically enables to assume the center of gravity arbitrarily within reasonable limits e.g. that the center of gravity is initially within the geometrical limits of the body and moves with the bodies motion.

As compared to conventional methods and systems, significant advantages are obtained by the invention. By using the augmented extended Kalman filter according to the invention modeling errors are significantly reduced due to concurrently estimating forces and torques on the assumed center of gravity. An additional understanding underlying the invention is that sufficiently accurate results are possible by not knowing but assuming the position of the center of gravity, which lowers the required a-priori knowledge of the body properties.

Next to the abovementioned types of application the invention may beneficially be used to estimate the body position continuously for example when position sensor faults require the estimation of the position. The invention enables to use acceleration sensors for a best estimate of the position. Another beneficial application is a refinement of position in case of a position indication system of sparse position indication of a system with low spatial and/or temporal resolution. The invention makes it possible to adapt the position data to the technical requirements of possibly higher resolution - not only by means of simple extrapolation, but with the help of acceleration measurements and the best possible enhancement of the information available.

According to one embodiment it is proposed, that said at least one motion sensor comprises at least 3 accelerometers configured to each measure acceleration in three independent spatial directions and wherein in step (b) said measured motion parameters comprise measurements of acceleration in said three spatial directions. This option enables fully spatial tracking and prediction of the body motion.

According to one embodiment it is proposed, that said at least one motion sensor comprises at least one gyroscope configured to measure angular velocity along at least one spatial axis and wherein in step (b) said measured motion parameters comprise measurements of angular velocity along at least one spatial axis. This option improves the accuracy of the orientation estimate and furthermore improves the general body motion estimate accuracy.

Most preferably it is proposed, that said at least one motion sensor comprises gyroscopes to measure angular velocities along three independent spatial axes and that said measured motion parameters comprise measurements of angular velocity along three independent spatial axes.

According to one embodiment it is proposed, that the predicted body motion parameters comprise the body position and the body orientation. The motion model preferably models these motion parameters to enable a high accuracy prediction.

According to one embodiment it is proposed, the motion-model utilizes a single rigid multibody floating frame of reference formulation to describe the dynamics of the body. Employing a rigid multibody model within the Kalman filter enables accurate estimates using only accelerometer and optionally gyroscope measurements, not requiring physical position-level measurements stemming from a secondary filter and/or physical position-level sensors. The estimate is well suited as a virtual measurement as in the examples given above.

According to one embodiment it is proposed, that the motion-model uses a formulation based on quaternions to describe the orientation of the body in space. This formulation enables an efficient handling and processing of the underlying problem, supporting to get a solution fast.

According to another embodiment it is proposed, that the motion-model uses a first-order form index-2 Differential Algebraic Equation [7] formulation for mapping the body motion.

An index-2 Differential Algebraic Equation [DAE] combines ordinary differential equations and algebraic equations, wherein said DAE system, the index represents the highest order of differentiation occurring in the ordinary differential equations.

This formulation enables an accurate and fast prediction of the body's pose. Below referenced citation [7] discloses the theory behind said first-order form, index-2 Differential Algebraic Equation, which may be termed the GGL-form referring to the authors Gear, G.K. Gupta, B. Leimkuhler. In a preferred embodiment the invention makes use of this formulation as it enables fast and accurate results.

As an example, the translational motion of a rigid body, like a car, can be described using a floating frame of reference formulation utilizing quaternions to describe the orientation, cast into the index-2 Differential Algebraic Equation [DAE]. The motion of the car may be defined by two sets of equations: algebraic constraint equations related to the quaternions, and the dynamic differential equation, which connects the derivative of velocity to the external force divided by the mass of the car. Solving these equations simultaneously allows for the determination of the car's position and velocity during translational motion, based on the applied force and car's mass.

According to one embodiment it is proposed that said method comprises the additional step of outputting the prediction on an HMI-display using a graphical user interface illustrating the motion-path as an image or video. This enables a user to visually follow the body motion. The display may show additional information about the motion, the body and/or the surrounding of the body. This may enable a collision warning or a criticality information, like a prognosed time to collision if the current motion is not changed by steering action or external forces.

According to one embodiment it is proposed that said body is a component of a vehicle e.g. a suspension, and the HMI display belongs to a positioning system. The invention is preferably useful for this application field.

The invention may, for example, be carried out as a virtual sensing approach, by means of an augmented extended Kalman filter that combines a rigid single-body plant model of the body, allowing to estimate rigid body translation and orientation, using only measurements stemming from accelerometers and optionally gyroscopes. Along with the regular states, the Kalman filter concurrently estimates the physical forces and torques that are acting on the assumed center of gravity of the body in space to achieve the measured accelerations and optionally angular velocities. The center of gravity may be arbitrarily chosen, as the proposed invention does not assume nor require knowledge of the inertial properties of the body. Concurrently estimating forces and torques acting on the assumed center of gravity of the body allows to mitigate any mismatch in assumed dynamic/inertial properties. The estimated force and torque values are not of direct interest, as they have to be considered as equivalent forces and torques without physical interpretation, serving only to achieve the successful position and orientation estimation.

According to the invention the initial position and initial orientation of at least one motion sensor attached to said body is known. According to a preferred embodiment the initial position and orientation of the body are provided, too. In practice the pose of the body may be provided, as well as the relative position and orientation of the sensors (placed on the physical body) with respect to the body-attached frame of reference.

As explained above the plant model may use a rigid multibody floating frame of reference formulation that, specifically as employed within the invention, describes the dynamics of the single considered body. The formulation may use quaternions to describe the orientation of the body in space and may be provided to map the motion by a first-order form, index-2 Differential Algebraic Equation [1] formulation, which is termed hereinafter also as GGL.

The first-order form of the plant model formulation beneficially promotes the Kalman filter application. This first-order form may most beneficially be achieved via the GGL formulation.

One benefit of the preferred single rigid multibody floating frame of reference formulation is that the model can be designed more flexible with basically the only necessary requirement that the length of the quaternion vector of the formulation must equal 1. In this formulation, the body is represented by its body-attached frame of reference which describes the position and orientation of the body in space, with an associated inertia tensor.

From [8] a filter termed Augmented Manifold Differential-Algebraic Extended Kalman Filter [AMANDA-EKF] is known. It is a formulation for state and input estimation of multibody systems described by a set of differential algebraic equations. The purpose of this filter is to allow for exact constraint satisfaction without requiring the reformulation of the multibody system equations.

The AMANDA-EKF consists of two main steps:
1. Elimination of Lagrange multipliers: The first step involves eliminating the Lagrange multipliers from the system state through a nullspace projection. This projection helps simplify the representation of the system state.
2. Constraint manifold correction: The second step is an additional correction that ensures the a-posteriori estimated system state lies on the constraint manifold. This is achieved through solving a constrained optimization problem using a Euclidean descent approach and projecting the solution onto the constraint manifold, which is known as manifold optimization.

AMANDA-EKF is numerically validated on both open and closed kinematic chain rigid multibody models. It is demonstrated to be robust and independent of the type of kinematic chain being considered.

Preferably, an embodiment of the invention applies a closed-form solution of the AMANDA-EKF approach, derived specifically for the case of a single body in space, to combine the rigid multibody model within an augmented Kalman filter and ensure meeting the single constraint equation.

Preferably an embodiment of the invention provides an expression to calculate the nullspace of the constraint equation manifold. This feature is beneficially used in connection with using the AMANDA-EKF methodology. Herein, the nullspace of a constraint equation manifold refers to the set of all vectors that satisfy the constraints of the manifold. In other words, it is the set of all vectors that, when multiplied by the constraint matrix, result in the zero vector.

By determining the nullspace the constraint equation may be eliminated such that the index-2 Differential Algebraic Equations can be transformed into a set of Ordinary Differential Equations. Transforming the index-2 Differential Algebraic Equations into a set of Ordinary Differential Equations is beneficial for using the Kalman filter with a stable plant model formulation.

This pre-conditioning of the augmented Kalman filter equations guarantees numerical robustness of the invention.

Most preferably the invention applies stabilizing virtual position and orientation measurements comparable to the approach proposed by Naets et al. [9]. Naets et al. [9] uses position-level measurements that remove any drift stemming from using physical acceleration and optionally gyroscope measurements which is effectively stabilizing the estimation results.

According to a preferred embodiment two different, working minimal sensor layouts may be used in combination with the method according to the invention respectively the augmented extended Kalman filter framework as described above These preferred layouts are:
1. Three tri-axial DC accelerometers placed non-colinearly on the body wherein the locations of the three tri-axial DC accelerometers define a plane.
2. One tri-axial DC accelerometer and one tri-axial DC gyroscope, placed on two different locations.

### References:

[7] C.W. Gear, B. Leimkuhler, G.K. Gupta, Automatic integration of Euler-Lagrange equations with constraints, Journal of Computational and Applied Mathematics 12 (1985) 77-90.
[8] T. Tamarozzi, P. Jiránek, D. De Gregoriis, A differential-algebraic extended Kalman filter with exact constraint satisfaction, Mechanical Systems and Signal Processing 206 (2024) 110901.
[9] F. Naets, J. Cuadrado, W. Desmet, Stable force identification in structural dynamics using Kalman filtering and dummy-measurements, Mechanical Systems and Signal Processing 50-51 (2015) 235-248. https://doi.org/10.1016/j.ymssp.2014.05.042.

These citations are incorporated by reference such that a person with ordinary skill in the art may use this teaching when putting the invention into practice.

Preferred embodiments are subject of the dependent claims.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

### Brief description of the drawings

Fig 1: illustrates a flow diagram of an example methodology according to the invention,
Fig 2 and 3: illustrate minimum sensor layouts,
Fig 4 and 5: illustrate an experimental validation of the invention,

### Detailed description of the drawings

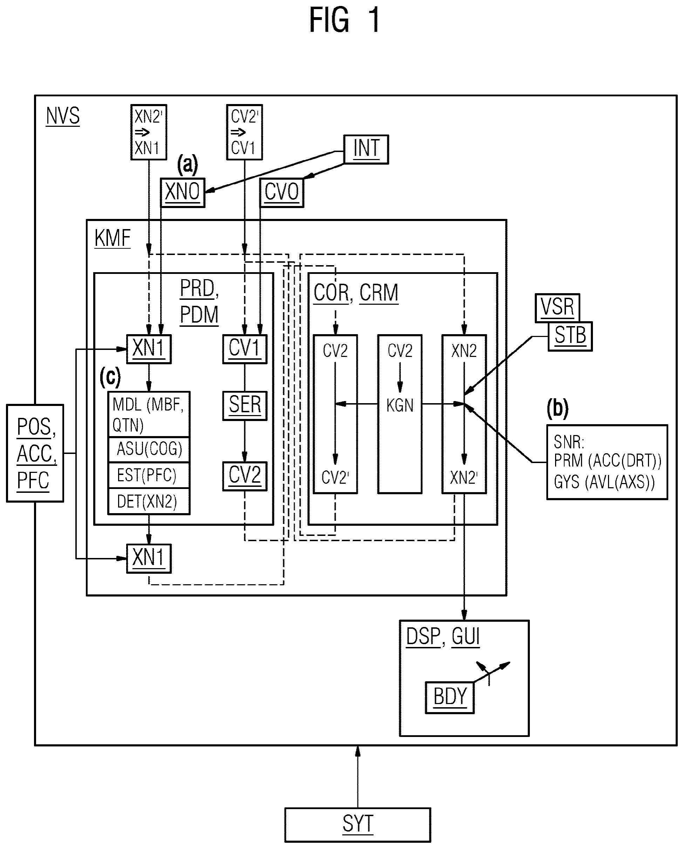

Figure 1 illustrates a flow diagram of a computer implemented method and a system SYT for continuous position and orientation estimation of a moving body BDY according to the invention, as an example as part of a positioning system NVS. A central element of the method is a Kalman filter KMF (=> step (d)) which basically acts like a digital twin of the moving body BDY. In a first step (a) an initial INT position POS and initial INT orientation ORN of a motion sensor SNR attached to said body BDY is provided. Preferably, also the initial position and orientation of the body BDY is provided in this step.

Said digital twin characteristic becomes clearer during a next step (b) of measuring motion parameters PRM comprising at least one acceleration ACC in at least one spatial direction DRT, using said motion sensor SNR.

The Kalman filter KMF comprises (step (c)) a motion-model MMD for predicting the motion of the body BDY wherein the motion-model MMD is designed to time-stepwise determine an estimate EST of the translation and orientation ORN of the body BDY. The motion-model MMD puts motion parameters PRM into relation to each other, wherein said parameters are as explained above the invention proposes as step (d) to provide a Kalman filter KMF comprising a prediction module PDM and a correction module CRM both working in a repetitive loop. Herein, the motion-model MMD is used as the prediction module PDM for estimating EST the motion of the body BDY.

The motion-model MMD comprises essential aspects of the invention and performs the following steps when predicting the motion of the body BDY:
- assuming ASU a center of gravity COG of the body BDY,
- estimating EST the physical forces PFC and torques that are acting on the assumed center of gravity COG of the body BDY to achieve the measured motions,
- determining DET a prediction of the body BDY position POS and orientation XN2 from the estimated EST physical forces PFC and torques.

The motion-model MMD utilizes a single rigid multibody floating frame of reference formulation MBF to describe the dynamics of the body BDY. This formulation is based on quaternions QTN to describe the orientation ORN of the body BDY in space and wherein the body BDY motion is mapped using a first-order form, index-2 Differential Algebraic Equation according to Gear, Lemkuhler & Gupta formulation. As in figure 1 illustrated, the Kalman filter KMF repeatedly determines and corrects the motion parameters which are summarized in a motion-parameter vector XN1, XN2, XN2' which vector includes the position and orientation of the body BDY, their first derivatives, as well as at least the acceleration ACC or physical forces PFC - handled by the Kalman filter KMF. The vector XN0, XN1, XN2, XN2' is referenced with different references in different stages of the predicting and correcting steps but remains the same in its structure, the different references only refer to different stages of processing.

In figure 1 these references are:
XN0: Initial motion parameter vector
XN1: Current/previous time step motion parameter vector (herein 'previous' refers to XN2)
XN2: Updated time step motion parameter vector
XN2': Corrected updated time step motion parameter vector

As the correction module CRM and the prediction module PRM work in a repetitive loop and for plausibility the updated corrected motion parameter vector XN2' is set (XN2' => XN1) to be the previous time step motion parameter vector XN1 before starting the next predicting PRD step. The Kalman filter KMF further comprises a correction module CRM for correcting COR the prediction of the position and orientation. The correction COR involves amending the estimated motion parameters XN2 resulting in corrected motion parameters XN2'. The correction uses an updated covariance matrix CV2 wherein the covariance matrix CV1, CV2 is repeatedly updated (CV1 => CV2) in the prediction module PDM. From the updated covariance matrix CV2 a Kalman gain KGN is determined in the correction module CRM. The Kalman gain KGN is used to correct the motion parameters PRM including the body BDY motion parameters XN2, XN2' and the covariance matrix CV2, leading to an updated covariance matrix CV2'. Identically to the corrected updated motion parameter vector XN2' being set (XN2' => XN1) as the current to time step motion parameter vector XN1 the updated covariance matrix CV2' is set to be the covariance matrix CV1 at the beginning of each predicting PRD step.

Further input into the correction COR is the sensor SNR measurement of step (b) of the motion parameter PRM - here the acceleration ACC along a spatial direction DRT.

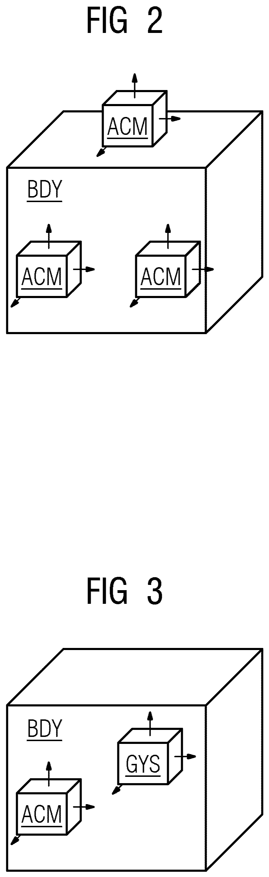

Preferably the sensor SNR measurement comprises the measurement of at least 3 accelerometers ACM configured each to measure acceleration ACC in three independent spatial directions DRT and wherein in step (b) said measured motion parameters PRM comprise measurements of acceleration ACC in said three spatial directions DRT. Most preferably the motion sensors SNR comprise at least one gyroscope GYS configured to measure angular velocity AVL along at least one spatial axis AXS and wherein in step (b) said measured motion parameters PRM comprise measurements of angular velocity AVL along at least one spatial axis AXS. Verified working minimal sensor configurations according to the invention are explained in figures 2, 3.

Furthermore, a virtual sensor VSR may provide stabilizing virtual measurements STB of the body motion like acceleration, velocity or even the body position or any pose related parameter.

The computer implemented method predicts the body's BDY motion parameters PRM comprising the body position POS, the body BDY translation and preferably the body BDY orientation which may all be included in the vector of the body motion XN0, XN1, XN2, XN2'.

In this example, the results of the body motion estimation are displayed on an HMI-display DSP of a positioning system NVS using a graphical user interface GUI illustrating the motion-path as an image or video.

Figures 2 and 3 respectively show a minimal sensor SNR layout for estimating both the position and orientation of a body BDY in space.

The two working verified approaches illustrated are:
Figure 2: three accelerometers ACM configured to measure acceleration ACC in three independent spatial directions DRT or
Figure 3: one accelerometer ACM and one gyroscope GYS configured to measure angular velocities AVL along three independent spatial axes AXS.

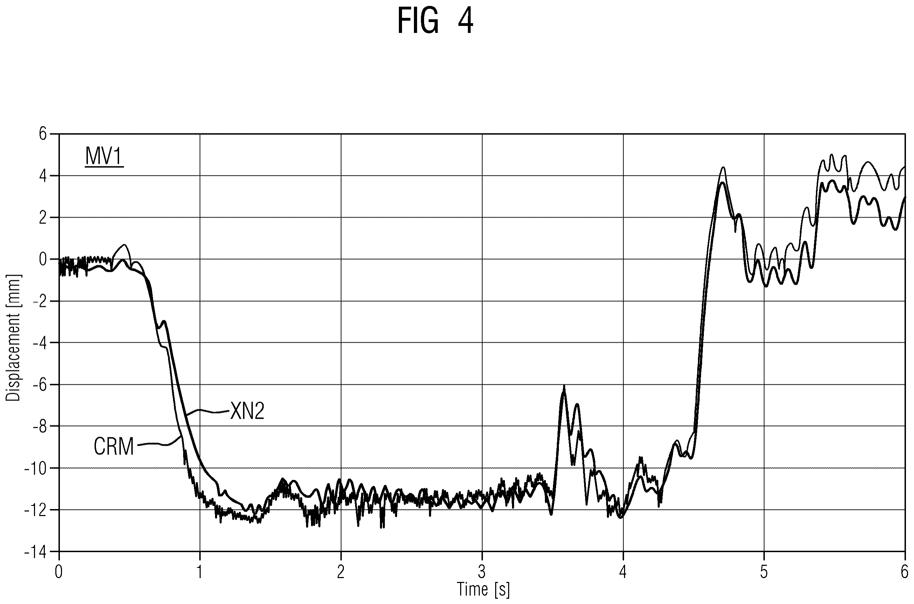

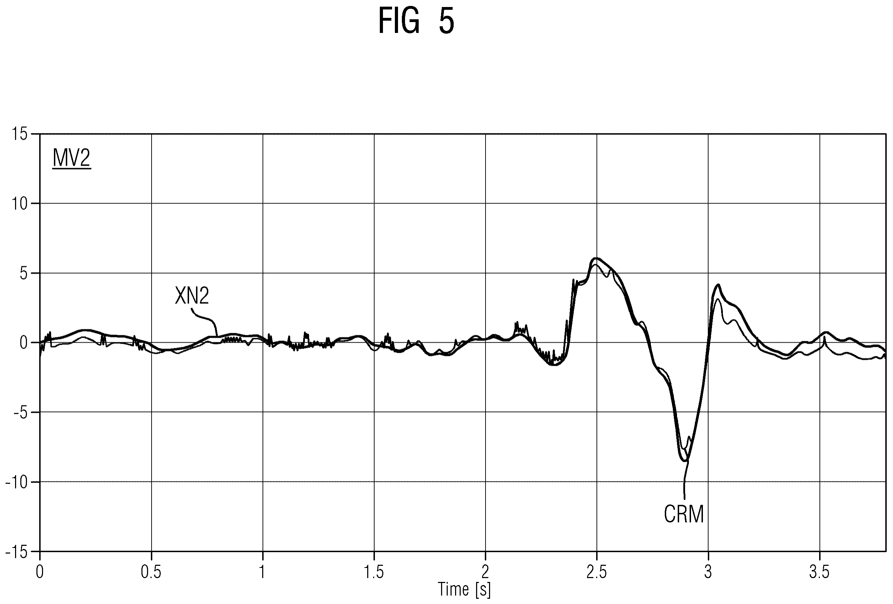

An experimental validation of the invention is shown in Figure 4 and Figure 5. Here, the engine of a car has been instrumented with three non-colinearly placed tri-axial DC accelerometers and data has been acquired during two different driving maneuvers MV1, MV2. During these maneuvers MV1, MV2, the engine movement displays both rigid body translation and rotation. The overall resulting estimated motion XN2', here the engine displacement is shown and compared with a camera-based reference measurement CRM. The invention achieves good accuracy for both maneuvers MV1, MV2.

Independent of the grammatical term usage, individuals with male, female or other gender identities are included within the term.

## Claims

1. Computer implemented method for continuous position estimation of a moving body (BDY), comprising:
(a) Providing an initial (INT) position (POS) and initial (INT) orientation (ORN) of at least one motion sensor (SNR) attached to said body (BDY);
(b) Measuring motion parameters (PRM) comprising at least one acceleration (ACC) in at least one spatial direction (DRT), using said at least one motion sensor (SNR);
(c) Providing a motion-model (MMD) for predicting the motion of the body (BDY),
wherein the motion-model (MMD) is designed to time-stepwise determine an estimate (EST) of the position and orientation (ORN) of the body (BDY);
(d) Providing a Kalman filter (KMF) comprising a prediction module (PDM) and a correction module (CRM) both working in a repetitive loop,
wherein said motion-model (MMD) is used as the prediction module (PDM) for estimating (EST) the motion of the body (BDY)
**characterized in**
**that** said model performs the following steps when predicting the motion of the body (BDY):
- assuming a center of gravity (COG) of the body (BDY),
- estimating (EST) the physical forces (PFC) and torques that are acting on the assumed center of gravity (COG) of the body (BDY) to achieve the measured motions,
- determining a prediction of the body (BDY) position from the estimated (EST) physical forces (PFC) and torques.

2. Computer implemented method for continuous position estimation according to claim 1, wherein said at least one motion sensor (SNR) comprises at least 3 accelerometers (ACM) configured to each measure acceleration (ACC) in three independent spatial directions (DRT) and wherein in step (b) said measured motion parameters (PRM) comprise measurements of acceleration (ACC) in said three spatial directions (DRT).

3. Computer implemented method for continuous position estimation according to claim 1 or 2, wherein said at least one motion sensor (SNR) comprises at least one gyroscope (GYS) configured to measure angular velocity (AVL) along at least one spatial axis (AXS) and wherein in step (b) said measured motion parameters (PRM) comprise measurements of angular velocity (AVL) along at least one spatial axis (AXS).

4. Computer implemented method for continuous position estimation according to one of the preceding claims, wherein the predicted body (BDY) motion parameters (PRM) comprise the body (BDY) position and the body (BDY) orientation.

5. Computer implemented method for continuous position estimation according to one of the preceding claims, wherein the motion-model (MMD) utilizes a single rigid multibody floating frame of reference formulation (MBF) to describe the dynamics of the body (BDY).

6. Computer implemented method for continuous position estimation according to one of the preceding claims, wherein the motion-model (MMD) uses a formulation based on quaternions (QTN) to describe the orientation (ORN) of the body (BDY) in space and wherein the body (BDY) motion is mapped using a first-order form, index-2 Differential Algebraic Equation according to Gear, Lemkuhler & Gupta formulation.

7. Computer implemented method for continuous position estimation according to one of the preceding claims, wherein said method comprises the additional step of outputting the prediction on an HMI-display using a graphical user interface illustrating the motion-path as an image or video.

8. Computer implemented method for continuous position estimation according to one of the preceding claims, wherein the body (BDY) is a vehicle, and the HMI-display belongs to a positioning system (NVS).

9. System, in particular positioning system (NVS),
**characterized in**
being designed and prepared to carry out a method according to at least one of the previous claims.

## Amended claims

### Amended claims in accordance with Rule 137(2) EPC.

1. Computer implemented method for continuous position estimation of a moving body (BDY), comprising:
(a) Providing an initial (INT) position (POS) and initial (INT) orientation (ORN) of at least one motion sensor (SNR) attached to said body (BDY);
(b) Measuring motion parameters (PRM) comprising at least one acceleration (ACC) in at least one spatial direction (DRT), using said at least one motion sensor (SNR);
(c) Providing a motion-model (MMD) for predicting the motion of the body (BDY), wherein the motion-model (MMD) is designed to time-stepwise determine an estimate (EST) of the position and orientation (ORN) of the body (BDY);
(d) Providing a Kalman filter (KMF) comprising a prediction module (PDM) and a correction module (CRM) both working in a repetitive loop,
wherein said motion-model (MMD) is used as the prediction module (PDM) for estimating (EST) the motion of the body (BDY),
wherein said model performs the following steps when predicting the motion of the body (BDY):
- assuming a center of gravity (COG) of the body (BDY),
- estimating (EST) the physical forces (PFC) and torques that are acting on the assumed center of gravity (COG) of the body (BDY) to achieve the measured motions,
- determining a prediction of the body (BDY) position from the estimated (EST) physical forces (PFC) and torques,
**characterized in that**
- the motion-model (MMD) uses a formulation based on quaternions (QTN) to describe the orientation (ORN) of the body (BDY) in space and wherein the body (BDY) motion is mapped using a first-order form, index-2 Differential Algebraic Equation according to Gear-Gupta-Leimkuhler formulation.

2. Computer implemented method for continuous position estimation according to claim 1, wherein said at least one motion sensor (SNR) comprises at least 3 accelerometers (ACM) configured to each measure acceleration (ACC) in three independent spatial directions (DRT) and wherein in step (b) said measured motion parameters (PRM) comprise measurements of acceleration (ACC) in said three spatial directions (DRT).

3. Computer implemented method for continuous position estimation according to claim 1 or 2, wherein said at least one motion sensor (SNR) comprises at least one gyroscope (GYS) configured to measure angular velocity (AVL) along at least one spatial axis (AXS) and wherein in step (b) said measured motion parameters (PRM) comprise measurements of angular velocity (AVL) along at least one spatial axis (AXS).

4. Computer implemented method for continuous position estimation according to one of the preceding claims, wherein the predicted body (BDY) motion parameters (PRM) comprise the body (BDY) position and the body (BDY) orientation.

5. Computer implemented method for continuous position estimation according to one of the preceding claims, wherein the motion-model (MMD) utilizes a single rigid multibody floating frame of reference formulation (MBF) to describe the dynamics of the body (BDY).

6. Computer implemented method for continuous position estimation according to one of the preceding claims, wherein said method comprises the additional step of outputting the prediction on an HMI-display using a graphical user interface illustrating the motion-path as an image or video.

7. System, in particular positioning system (NVS),
**characterized in**
being designed and prepared to carry out a method according to at least one of the previous claims.
